# EUROPÄISCHE PATENTSCHRIFT

(11) **EP 2 688 788 B1**
(45) Veröffentlichungstag und Bekanntmachung des Hinweises auf die Patenterteilung: **12.04.2017**
(21) Anmeldenummer: 12705850.1
(22) Anmeldetag: 24.02.2012
(51) Int. Cl.: B62D 25/04

(54) **VERSTÄRKUNGSBLECH EINER B-SÄULE**
METAL REINFORCING SHEET FOR A B PILLAR
TÔLE DE RENFORCEMENT D'UN PIED MILIEU

(30) Priorität: 23.03.2011 DE 102011005977
(43) Veröffentlichungstag der Anmeldung: 29.01.2014
(73) Patentinhaber: Ford Global Technologies, LLC, Dearborn, MI 48126 (US)
(72) Erfinder: BUSCH, Andreas, 51580 Reichshof (DE); VAN DIJK, Hessel, 51429 Bergisch Gladbach (DE); CURTIS, Chris, 51379 Leverkusen (DE); QUICK, Reiner, 50935 Köln (DE); MÜLLER, Thomas W., 50735 Köln (DE)
(74) Vertreter: Dörfler, Thomas
(86) Internationale Anmeldenummer: PCT/EP2012/053133
(87) Internationale Veröffentlichungsnummer: WO 2012/126697

(56) Entgegenhaltungen:
- EP-A2- 1 621 453
- DE-A1-102005 038 488
- DE-A1-102007 062 597
- DE-A1-102008 049 783

## Beschreibung

Die Erfindung betrifft ein Verstärkungsblech einer B-Säule einer Fahrzeugkarosserie, das aus einem warm umgeformten Tailor Rolled Blank besteht und das sich über die gesamte Höhe der B-Säule erstreckt sowie in unterschiedlichen Höhen der B-Säule unterschiedliche Blechdicken aufweist.

Eine B-Säule einer Fahrzeugkarosserie besteht meist aus einer Außenschale, die oft einteilig mit einem Seitenrahmen ausgebildet ist, der zugleich zumindest einen Teil eines Türschwellers, eines Dachseitenrahmens, einer A-Säule und gegebenenfalls einer C-Säule bildet, wie dies in der Figur 1 der EP 1 621 453 A2 gezeigt ist.

Die Außenschale soll dabei aus Gewichtsgründen und zur besseren Verformbarkeit aus einem möglichst dünnen Blechbestehen. Jedoch muss die B-Säule für die Befestigung von Türscharnieren und von Türschlössern sowie zum Schutz der Insassen bei einem Seitenaufprall eine möglichst hohe Festigkeit aufweisen.

Dazu weist die B-Säule ein Verstärkungsblech auf, das sich über die gesamte Höhe der B-Säule erstreckt. Die Anforderungen an dieses Verstärkungsblech sind dabei nicht in allen Bereichen gleich groß. So muss das Verstärkungsblech im unteren Abschnitt, in dem die B-Säule an den Türschweller anschließt, nur relativ geringe Festigkeits- und Steifigkeitsanforderungen erfüllen, während die Anforderungen an das Verstärkungsblech in der oberen Hälfte wesentlich höher sind, um zu gewährleisten, dass sich bei einem Seitencrash die B-Säule möglichst wenig in den Fahrgastraum hinein deformiert.

Aus der EP 1 621 453 A2 ist eine Karosserie für ein Kraftfahrzeug bekannt, die aus Hohlprofilen und Flächenelementen aus Blech gefügt ist, wobei Einzelelemente aus flexibel gewalztem Blech mit längs einer Richtung variabler Blechdicke eingesetzt sind, bei denen die Verteilungsbreite der spezifischen Belastung über dem Einzelelement durch die Wahl der Blechdickenverteilung reduziert oder minimiert ist.

Aus der DE 10 2008 049 783 A1 ist eine Türsäule für einen Kraftwagen bekannt, welche einen Hohlraum ausbildet, innerhalb welchem eine Verstärkungsanordnung angeordnet ist, die wenigstens ein Bauteil umfasst, welches als Tailored Tube oder als Tailored Blank ausgebildet ist.

Aus der EP 1 912 849 B1 ist ein Verstärkungsblech einer B-Säule einer Fahrzeugkarosserie bekannt, das aus einem umgeformten Tailor Rolled Blank besteht, wobei sich das Verstärkungsblech über die gesamte Höhe der B-Säule erstreckt, und dass das Verstärkungsblech aus einem warmumgeformten Tailor Rolled Blank besteht, das in unterschiedlichen Höhen der B-Säule unterschiedliche Blechdicken aufweist.

Ein Tailored Blank (englisch für maßgeschneiderte Platine) ist eine Blechplatine, welche aus verschiedenen Werkstoffgüten oder Blechdicken zusammengesetzt ist. Dieses vorgefertigte Halbzeug wird anschließend zum Beispiel durch Tiefziehen zum gewünschten Bauteil umgeformt. Tailored Blanks wurden entwickelt, um Blechplatinen herzustellen, welche eine beliebige Dickenverteilung und/oder Zusammensetzung verschiedener Materialien bzw- Materialgüten erlaubt. Dies ermöglicht, verschiedene Stellen des späteren Bauteils an lokale Belastungen anzupassen, was ansonsten zusätzliche Verstärkungsteile erfordert. Vorteile sind die Einsparung von Gewicht und Fertigungskosten.

Das Tailor Rolled Blank (TRB) as Sonderform des Tailored Blanks wird ein Blechband erneut kaltgewalzt, wobei die Walzen durch Auf- und Abfahren unterschiedliche Blechdicken im Blechband erzeugen. Vorteil ist der homogene Übergang zwischen zwei Dicken und dass keine Fügestellen im Blechband vorhanden sind.

Ein Verstärkungsblech einer B-Säule, das aus einem solchen Tailor Rolled Blank hergestellt ist, kann dementsprechend in unterschiedlichen Höhen der B-Säule unterschiedliche Blechdicken aufweisen. Es kann also in den Bereichen, an die besonders hohe Festigkeits- und Steifigkeitsanforderungen gestellt werden, besonders dick sein, während es in den Bereichen, die nur geringe Festigkeits- und Steifigkeitsanforderungen erfüllen müssen, entsprechend dünn ausgeführt sein kann. Dadurch können mit einem einzigen Verstärkungsblech die unterschiedlichen Anforderungen in den einzelnen Bereichen erfüllt werden. Andererseits ist das Verstärkungsblech nicht überall so dick, wie es im Bereich mit den höchsten Anforderungen erforderlich ist.

Allerdings sind weitere Optimierungen der Festigkeit zur weiteren Verbesserung des Insassenschutze gewünscht. Gleichzeitig fällt bei dem Tailor Rolled Blank Verfahren ein relativ großer Verschnitt durch die Lage der Blechplatinen auf dem Blechband auf, so dass die Herstellung mit hohen Kosten versehen ist.

Demgegenüber besteht die Aufgabe der vorliegenden Erfindung ein gattungsgemäßes Verstärkungsblech bereitzustellen, das hinsichtlich seiner Festigkeit optimiert und gleichzeitig besonders wirtschaftlich herstellbar ist.

Diese Aufgabe wird durch das in Anspruch 1 wiedergegebene Verstärkungsblech sowie dem Verfahren zur Herstellung eines entsprechenden Verstärkungsblechs nach Anspruch 5 gelöst.

Dadurch, dass die Bereiche unterschiedlicher Blechdicke zum Bereich der stärksten Blechdicke symmetrisch über die Höhe der B-Säule angeordnet sind, ist es möglich, eine optimale Festigkeit mit einer Gewichtsverringerung zu verbinden. Zudem ist es so möglich, den Platinenzuschnitt bei der Herstellung der Verstärkungsbleche so zu optimieren, dass weniger Verschnitt auftritt und somit die Herstellung effizienter wird.

Untersuchungen der Anmelderin haben ergeben, dass der Grad der Materialausnutzung des Blechbandes im bestimmten Fall von 48 % auf 66 % erhöht werden kann.

Sinnvollerweise ist dabei der Bereich der stärksten Blechdicke etwa auf der Höhe der Gürtellinie angeordnet, da dieser der Bereich der späteren B-Säule ist, in dem eine hohe Unfallgefahr vorliegt und ab dem nach oben hin die B-Säule sich üblicherweise zur besseren Sicht verschlankt.

Eine besonders gute Optimierung der Ausnutzung des Blechbands ergibt sich erfindungsgemäß, wenn das Verstärkungsblech im unteren Abschnitt, in dem die B-Säule an den Türschweller anschließt, nicht Teil der symmetrischen Anordnung der Blechdicken ist (siehe unten).

In einer bevorzugten Ausführungsform beträgt der maximale Unterscheid der Blechdickenänderung zwischen dem dünnsten und dem stärksten Bereich 50%. Vorzugsweise beträgt die Blechdicke kleiner 1,5 mm im unteren Abschnitt, in dem die B-Säule an den Türschweller anschließt. Ebenfalls ist es bevorzugt, wenn die Blechdicke größer 2 mm im stärksten Bereich beträgt. Besonders bevorzugt ist es, wenn die kleinste Blechdicke 1,35 mm und die stärkste Blechdicke 2,7 mm betragen.

Die Erfindung umfasst auch ein Verfahren zur Herstellung eines B-Säulen-Verstärkungsblechs nach einem der vorhergehenden Ansprüche, bei dem in einem Blechband Bereiche unterschiedlicher Blechdicke durch Walzen erzeugt werden (Tailor Rolled Blank Verfahren), aus diesem Blechband Blechplatinen mit Bereichen unterschiedlicher Blechdicke ausgestanzt werden und abschließend diese Blechplatinen in einer Presse warmumgeformt werden, um die Karosseriebleche auszubilden. Verfahren ist dadurch gekennzeichnet, dass zwei Blechplatinen für die linke und die rechte Seite eines Fahrzeugs im Blechband in Walzrichtung gesehen versetzt, nebeneinander und entgegengesetzt ausgerichtet sind. Damit kann der Verschnitt der Blechbandes beim Ausschneiden der Blechplatinen wesentlich reduziert werden bei gleichzeitiger guter Anpassung der Dickenverteilung an die erforderlichen bereichsweisen Festigkeiten des Karosseriebleches.

Dieses Verfahren funktioniert gemäß der Erfindung besonders gut, wenn zwei Blechplatinen mit im wesentlich ähnlichen, aber spiegelbildlichen Umrissen aus dem Blechband ausgestanzt werden sollen. Dies ist insbesondere der Fall, wenn ein rechtes und ein linkes Blechteil einer Fahrzeugkarosserie hergestellt werden soll, da die diese Teile überwiegen symmetrisch aufgebaut sind, d.h. das rechte und das linke Teil sind spiegelbildlich gesehen überwiegend identisch. Dabei bedeutet die versetzte nebeneinander Anordnung der Blechplatinen, dass die Platinen beim Ausschneiden aus dem Blechband in Walzrichtung gesehen zwar nebeneinander angeordnet sind, aber die Enden der beiden Blechplatinen in Walzrichtung gesehen um einen bestimmten Betrag versetzt sind. Entgegengesetzt angeordnet bedeutet, dass die eine Blechplatine in Walzrichtung kopfseitig gegeneinander angeordnet sind. Damit können vor allem Blechplatinen für die Karosseriebleche mit wenig Verschnitt aus dem Blechband herausgeschnitten bzw. herausgestanzt werden, die einen unregelmäßigen Beschnitt aufweisen, insbesondere wenn in Walzrichtung gesehen die Breite der Blechplatine schwankt.

Vorteilhaft ist der Versatz in Walzrichtung der beiden Blechplatinen so, das Bereiche gleicher Blechdicken auf den gespiegelten Blechplatinen identisch sind. Damit weisen die beiden Karosseriebleche links und rechts die gleiche Dickenverteilung über ihre Länge auf.

Bevorzugt sind die zwei Blechplatinen für ein Verstärkungsblech einer B-Säule derart zu einander versetzt angeordnet sind, dass die unteren Abschnitte der jeweiligen Blechplatine, in dem die B-Säule an den Türschweller anschließt, und diese in der Zusammenschau beider Blechplatinen symmetrisch angeordnet sind. Damit kann der breite untere Bereich des B-Säulen-Verstärkungsbleches fast die gesamte Breite des Blechbandes einnehmen, während im Übrigen Bereich sich die beiden Blechplatinen nebeneinander auf dem Blechband angeordnet sind. Besonderst vorteilhaft sind dabei die zwei Blechplatinen derart zu einander versetzt angeordnet, dass der untere Abschnitt der einen Blechplatine an den oberen Abschnitt der anderen Blechplatine angrenzt.

Besonders effizient ist es, wenn die zwei Blechplatinen etwa um 180 Grad zu einander verdreht angeordnet sind und dabei ggf. auch noch derart zu einander versetzt angeordnet sind, dass der untere Abschnitt der jeweiligen Blechplatine, in dem die B-Säule an den Türschweller anschließt, und diese in der Zusammenschau beider Blechplatinen symmetrisch angeordnet sind.

Dann können die Blechplatinen in "einander verschachtelt" angeordnet werden und es wird eine erhebliche Materialausnutzung erreicht. Auch ist es so möglich, beide Blechplatinen gleichzeitig zu walzen.

Weitere Einzelheiten, Merkmale und Vorteile der Erfindung ergeben sich aus der nachfolgenden Beschreibung eines Ausführungsbeispiels anhand der Zeichnung, in der
Fig. 1 eine perspektivische schematische Ansicht eines B-Säulen-Verstärkungsbleches und
Fig. 2 eine schematische Draufsicht auf ein Blechband mit zwei daraus auszuschneidenden Blechplatinen.

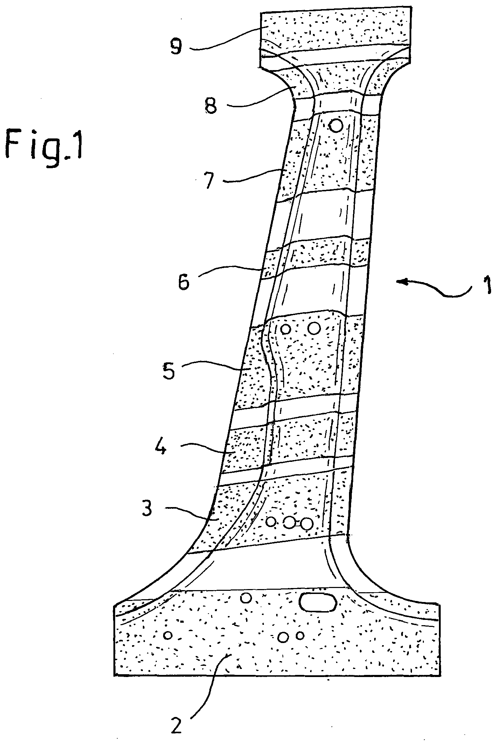

Figur 1 zeigt eine perspektivische schematische Ansicht eines erfinderischen B-Säulen-Verstärkungsbleches 1 das hergestellt wurde, indem ein Blechband nach dem Tailor Rolled Blank Verfahren mit unterschiedlichen Dicken gewalzt wurde, aus dem Blechband 2 eine Blechplatine ausgestanzt und diese anschließend zum Verstärkungsblech warmumgeformt wurde.

Das Verstärkungsblech 1 umfasst Bereiche 3 - 9 unterschiedlicher Blechdicke, die zu einem Bereich der stärksten Blechdicke 6 symmetrisch über die Höhe der B-Säule bzw. des Verstärkungsblechs 1 angeordnet sind.

Das Verstärkungsblech 1 umfasst einen - in Einbaulage an der B-Säule gesehen - unteren Flansch 2, an dem die B-Säule an den Türschweller anschließt, der von dieser symmetrischen Anordnung der Bereiche 3 - 9 zum Bereich 6 der Blechdicke ausgenommen ist.

Der Bereich der symmetrischen Anordnung des Verstärkungsblechs 1 umfasst einen unten angeordneten Bereich 3, der sich an den unteren Flansch 2 anschließt, und einen oberen Flansch 9, an dem die B-Säule an dem Dachrahmen anschließt, die dieselbe Blechdicke aufweisen.

Weiter nach innen angeordnet sind zwei Bereiche 4 und 8 derselben Blechdicke, die gegenüber der Blechdicke der Bereiche 3, 9 leicht abnimmt, und entsprechend noch weiter nach innen hin angeordnet nochmal zwei weitere Bereiche 5 und 7 derselben Blechdicke, die gegenüber der Blechdicke der Bereiche 4, 8 stark und gegenüber den Bereichen 3, 9 leicht zu nimmt, zwischen denen der Bereich 6 der stärksten Blechdicke angeordnet ist, was in etwa der Gürtellinie entspricht.

Der Flansch 2 zum Türschweller ist besonders dünn und weist lediglich eine Blechdicke von 1,35 mm auf. Die beiden Bereiche 3, 9 sind dünn gewalzt und weisen eine Blechdicke 2,3 mm auf. Die Bereiche 4, 8 weisen eine Blechdicke von 2,1 mm auf und die Bereiche 5, 7 eine Blechdicke von 2,4 mm auf. Der stärkste Bereich 6 weist eine Blechdicke von 2,7 mm auf.

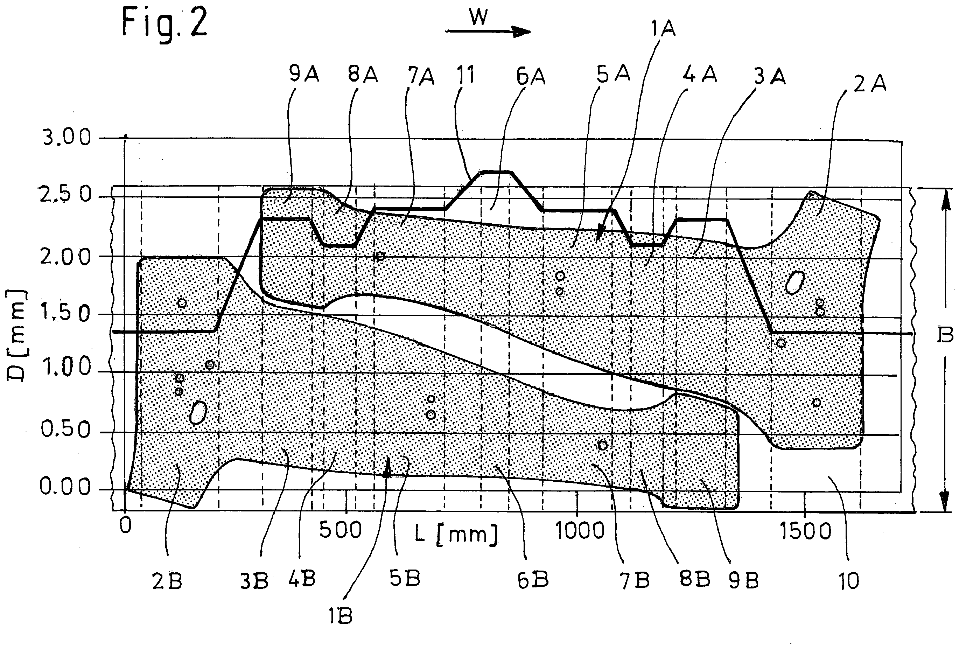

In Figur 2 ist eine schematische Draufsicht auf ein Blechband 10 mit zwei daraus auszustanzenden Blechplatinen 1A, 1B gezeigt, die mit einem Diagramm (Höhenlinien) des Dickenverlaufs 11 der Blechdicke D (in mm) über die Länge L (in mm) überlagert ist, in der die symmetrische Anordnung der Blechdickenbereiche 3 - 9 zum Bereich 6 nochmal anschaulich ersichtlich ist.

Man erkennt, dass die Anordnung der späteren Blechplatinen 1A, 1 B im Blechband 10 benachbart und derart zueinander ist, dass die symmetrische Anordnung der Bereiche 3 - 9 unterschiedlicher Blechdicke zum Bereich der stärksten Blechdicke 6 über die Höhe der B-Säule für beide benachbarte Blechplatinen 1A, 1 B gleich ist.

Die beiden Blechplatinen 1A und 1 B weisen die Grundform für das rechte und das linke B-Säulen-Verstärkungsblech auf. Sie sind dabei entgegengesetzt etwa um 180 Grad zu einander verdreht angeordnet und in Walzrichtung W des Blechbandes 10 gleichzeitig derart zu einander versetzt angeordnet, dass der untere Bereich 2 der jeweiligen Blechplatine, in dem die B-Säule an den Türschweller anschließt, nicht Teil der symmetrischen Anordnung der Blechdicken ist. Dieser Bereich geht, wegen der großflächigen Ausformung für eine bessere Anbindung der B-Säule in den Türschweller, fast über die gesamte Breite B des Blechbandes 10.

Weiterhin sind die zwei Blechplatinen 1A, 1B derart zu einander versetzt angeordnet sind, dass der untere Bereich 2 der einen Blechplatine 1A an den oberen Abschnitt 9 der anderen Blechplatine 1 B angrenzt, so dass diese wiederum in der Zusammenschau beider Blechplatinen 1A, 1 B symmetrisch angeordnet sind, so das Blechband 10 in Walzrichtung W gesehen in Bezug auf den Bereich größter Dicke in und gegen die Walzrichtung W eine symmetrische Dickenverteilung aufweist.

### Bezugszeichenliste

- 1A, 1B: Blechplatine
- 1: B-Säulen-Verstärkungsblech
- 2: Flansch, dünnster Bereich
- 3 - 9: Bereiche unterschiedlicher Blechdicke
- 6: Bereich stärkster Blechdicke
- 10: Blechband
- 11: Dickenverlauf

- L: Länge
- D: Blechdicke
- B: Breite des Blechbandes
- W: Walzrichtung

## Patentansprüche

1. Verstärkungsblech (1) einer B-Säule einer Fahrzeugkarosserie, das aus einem warmumgeformten Tailor Rolled Blank besteht und das sich über die gesamte Höhe der B-Säule erstreckt sowie in unterschiedlichen Höhen der B-Säule unterschiedliche Blechdicken aufweist,
**dadurch gekennzeichnet, daß**
die Bereiche (3 -9) unterschiedlicher Blechdicke zum Bereich der stärksten Blechdicke (6) symmetrisch über die Höhe der B-Säule angeordnet sind, wobei das Verstärkungsblech (1) im unteren Abschnitt (2), in dem die B-Säule an den Türschweller anschließt, nicht Teil der symmetrischen Anordnung der Blechdicken ist.

2. Verstärkungsblech nach Anspruch 1,
**dadurch gekennzeichnet, daß**
der Bereich der stärksten Blechdicke (6) etwa auf der Höhe der Gürtellinie angeordnet ist.

3. Verstärkungsblech nach einem der vorhergehenden Ansprüche, **dadurch gekennzeichnet, dass**
die Blechdicke kleiner 1,5 mm im unteren Abschnitt (2), in dem die B-Säule an den Türschweller anschließt, beträgt.

4. Verstärkungsblech nach einem der vorhergehenden Ansprüche, **dadurch gekennzeichnet, dass**
die Blechdicke größer 2 mm im stärksten Bereich (6) beträgt

5. Verfahren zur Herstellung eines Verstärkungsblechs (1) einer B-Säule einer Fahrzeugkarosserie nach einem der vorhergehenden Ansprüche, bei dem in einem Blechband Bereiche unterschiedlicher Blechdicke durch Walzen erzeugt werden, aus diesem Blechband Blechplatinen mit Bereichen unterschiedlicher Blechdicke ausgestanzt werden und abschließend diese Blechplatinen in einer Presse warmumgeformt werden, um das Verstärkungsblech (1) auszubilden,
**dadurch gekennzeichnet, dass**
zwei Blechplatinen (1A, 1 B) für die linke und die rechte Seite eines Fahrzeugs im Blechband in Walzrichtung gesehen versetzt, nebeneinander und entgegengesetzt ausgerichtet sind, wobei der Versatz in Walzrichtung der beiden Blechplatinen (1A, 1 B) so ist, dass Bereiche gleicher Blechdicken auf den gespiegelten Blechplatinen (1A, 1 B) identisch sind.

6. Verfahren nach Anspruch 5, **dadurch gekennzeichnet, dass** die zwei Blechplatinen (1A, 1 B) für ein Verstärkungsblech einer B-Säule derart zu einander versetzt angeordnet sind, dass die unteren Abschnitte (2A, 2B) der jeweiligen Blechplatine, in dem die B-Säule an den Türschweller anschließt, und diese in der Zusammenschau beider Blechplatinen (1A, 1 B) symmetrisch angeordnet sind.

7. Verfahren nach Anspruch 6, **dadurch gekennzeichnet, dass** die zwei Blechplatinen (1A, 1 B) derart zu einander versetzt angeordnet sind, dass der untere Abschnitt (2A) der einen Blechplatine (1A) an den oberen Abschnitt (9B) der anderen Blechplatine (1 B) angrenzt.

## Claims

1. Metal reinforcement sheet (1) of a B-pillar of a vehicle bodywork, which sheet comprises a hot-formed tailor rolled blank, extends over the entire height of the B-pillar and has different sheet thicknesses at different heights of the B-pillar,
**characterized in that**
the regions (3-9) of different sheet thicknesses are arranged symmetrically over the height of the B-pillar with respect to the region of the greatest sheet thickness (6), wherein the metal reinforcement sheet (1), in the lower portion (2) in which the B-pillar adjoins the door sill, is not part of the symmetrical arrangement of the sheet thicknesses.

2. Metal reinforcement sheet according to Claim 1,
**characterized in that**
the region of the greatest sheet thickness (6) is arranged substantially at the height of the waistline.

3. Metal reinforcement sheet according to one of the preceding claims, **characterized in that** the sheet thickness is less than 1.5 mm in the lower portion (2), in which the B-pillar adjoins the door sill.

4. Metal reinforcement sheet according to one of the preceding claims, **characterized in that**
the sheet thickness is greater than 2 mm in the thickest region (6).

5. Method for producing a metal reinforcement sheet (1) of a B-pillar of a vehicle bodywork according to one of the preceding claims, in which, in a metal strip, regions of different sheet thicknesses are produced by means of rolling, metal plates having regions of different thicknesses are punched from this metal strip and these metal plates are finally hot-formed in a press in order to form the metal reinforcement sheet (1),
**characterized in that**
two metal plates (1A, 1B) for the left and the right-hand side of a vehicle are orientated in the metal strip, when viewed in the rolling direction, so as to be offset from each other, beside each other and opposite each other, wherein the offset of the two metal plates (1A, 1B) in the rolling direction is such that regions of the same sheet thicknesses on the mirror-inverted metal plates (1A, 1B) are identical.

6. Method according to Claim 5, **characterized in that** the two metal plates (1A, 1B) for a metal reinforcement sheet of a B-pillar are arranged offset with respect to each other in such a manner that the lower portions (2A, 2B) of the respective metal plate in which the B-pillar adjoins the door sill, and they are arranged in a symmetrical manner when both metal plates (1A, 1B) are viewed together.

7. Method according to Claim 6, **characterized in that** the two metal plates (1A, 1B) are arranged in a state offset relative to each other in such a manner that the lower portion (2A) of one metal plate (1A) adjoins the upper portion (9B) of the other metal plate (1B).

## Revendications

1. Tôle de renforcement (1) d'un montant B d'une carrosserie de véhicule, qui se compose d'une ébauche roulée sur mesure façonnée à chaud et qui s'étend sur toute la hauteur du montant B et présente des épaisseurs de tôles différentes à différentes hauteurs du montant B,
**caractérisée en ce que**
les régions (3-9) d'épaisseurs de tôle différentes par rapport à la région d'épaisseur de tôle la plus épaisse (6) sont disposées symétriquement sur la hauteur du montant B, la tôle de renforcement (1) dans la portion inférieure (2) dans laquelle le montant B se raccorde au bas de marche, ne faisant pas partie de l'agencement symétrique des épaisseurs de tôle.

2. Tôle de renforcement selon la revendication 1,
**caractérisée en ce que**
la région d'épaisseur de tôle la plus épaisse (6) est disposée approximativement à la hauteur de la ligne de ceinture.

3. Tôle de renforcement selon l'une quelconque des revendications précédentes, **caractérisée en ce que** l'épaisseur de tôle est inférieure à 1,5 mm dans la portion inférieure (2) dans laquelle le montant B se raccorde au bas de marche.

4. Tôle de renforcement selon l'une quelconque des revendications précédentes, **caractérisée en ce que** l'épaisseur de tôle est supérieure à 2 mm dans la région la plus épaisse (6).

5. Procédé de fabrication d'une tôle de renforcement (1) d'un montant B d'une carrosserie de véhicule selon l'une quelconque des revendications précédentes, dans lequel, dans une bande de tôle, des régions d'épaisseurs de tôle différentes sont produites par laminage, des plaques de tôle avec des régions d'épaisseurs de tôle différentes sont estampées dans cette bande de tôle et ensuite ces plaques de tôle sont façonnées à chaud dans une presse pour créer la tôle de renforcement (1),
**caractérisé en ce que**
deux plaques de tôle (1A, 1B) pour le côté gauche et le côté droit d'un véhicule, décalées dans la bande de tôle dans la direction de laminage, sont orientées l'une à côté de l'autre et à l'opposé l'une de l'autre, le décalage dans la direction de laminage des deux plaques de tôle (1A, B) étant tel que des régions d'épaisseurs de tôle identiques soient identiques sur les plaques de tôle à symétrie miroir (1A, 1B).

6. Procédé selon la revendication 5, **caractérisé en ce que** les deux plaques de tôle (1A, 1B) pour une tôle de renforcement d'un montant B sont disposées de manière décalée l'une par rapport à l'autre de telle sorte que les portions inférieures (2A, 2B) de la plaque de tôle respective, dans laquelle le montant B se raccorde au bas de marche, soient disposées symétriquement et ce en examinant conjointement les deux plaques de tôle (1A, 1B).

7. Procédé selon la revendication 6, **caractérisé en ce que** les deux plaques de tôle (1A, 1B) sont disposées de manière décalée l'une par rapport à l'autre de telle sorte que la portion inférieure (2A) de l'une des plaques de tôle (1A) soit adjacente à la portion supérieure (9B) de l'autre plaque de tôle (1B).
